# EUROPEAN PATENT SPECIFICATION

(11) **EP 2 230 161 B1**
(45) Date of publication and mention of the grant of the patent: **18.04.2012**
(21) Application number: 09169557.7
(22) Date of filing: 04.09.2009
(51) Int. Cl.: B62J 3/00, B62K 23/06, G10K 1/074

(54) **Bicycle bell in the vicinity of brake lever**
Fahrradklingel in der Nähe des Bremshebels
Sonnette de bicyclette à proximité du levier de frein

(30) Priority: 16.03.2009 TW 98204069 U
(43) Date of publication of application: 22.09.2010
(73) Proprietor: Tektro Technology Corporation, Changhua County (TW)
(72) Inventor: Tsai, Szu-Fang, Sioushuei Township Changhua County (TW)
(74) Representative: Lang, Christian

(56) References cited:
- DE-A1- 3 326 008
- FR-A- 936 255
- JP-A- 8 258 766
- US-A1- 2008 173 231

## Description

### BACKGROUND OF THE INVENTION

### 1. Field of Invention

The invention relates to bicycle bells and more particularly to a bicycle bell mounted in the vicinity of a brake lever for easy manipulation and having other improved characteristics.

### 2. Description of Related Art

Conventionally, a bicycle warning bell is mounted on a handlebar and a distance between the bell and a brake lever is longer than the length of the thumb. It is thus typical for a rider to press a bell lever with the thumb and try to use the remaining fingers of the same hand to squeeze a brake lever when approaching, for example, pedestrian and further when brake is needed.

In fact the rider has to, for example, temporarily leave his or her hand off the brake lever so that the hand then can press the bell lever to cause a clapper to strike the bell drum. As a result, a warning ring is generated.

However, this is not a safe operation due to the temporary disengagement of the hand from the brake lever when braking. This is because the bell is mounted on a position of the handlebar beyond the reach of the thumb. Thus, a need for improvement exists.

The invention described later is an outgrowth of earlier work by the inventor hereof, described in U.S. Pat. No. 7,424,863, entitled "Bell and Brake Lever Combination for Bicycle".

### SUMMARY OF THE INVENTION

It is therefore one object of the invention to provide a bicycle bell mounted in the vicinity of a brake lever for easy manipulation.

It is another object of the invention to provide a bicycle bell adapted to play two different particular sequences of tones in one striking operation.

The invention is set out in claim 1. Advantageous embodiments of the invention are featured in the dependent claims 2 to 4.

The above and other objects, features and advantages of the invention will become apparent from the following detailed description taken with the accompanying drawings.

### BRIEF DESCRIPTION OF THE DRAWINGS

FIG 1 is a perspective view of a preferred embodiment of bicycle bell mounted in the vicinity of the base of a brake lever according to the invention;
FIG 2 is an exploded view of the bicycle bell wherein the brake lever is removed;
FIG 3 is a schematic top view of a portion of FIG. 1 showing a pivotal operation of the bell lever and the clapper for striking the drum;
FIG. 4 schematically depicts the clapper striking the drum via the guide member in one half operation to play a first particular sequence of tones;
FIG. 5 schematically depicts the clapper striking the drum via the guide member in the other half operation to play a second particular sequence of tones; and
FIG. 6 is a longitudinal sectional view of FIG. 1.

### DETAILED DESCRIPTION OF THE INVENTION

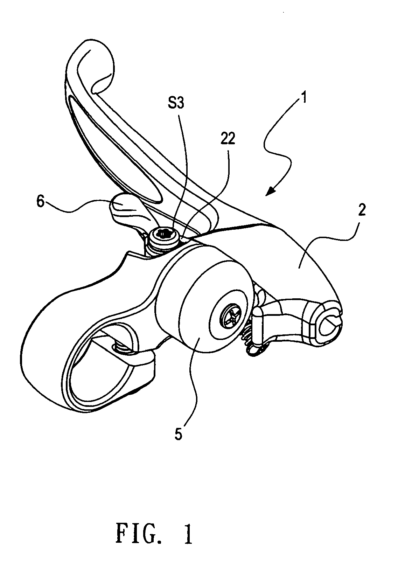

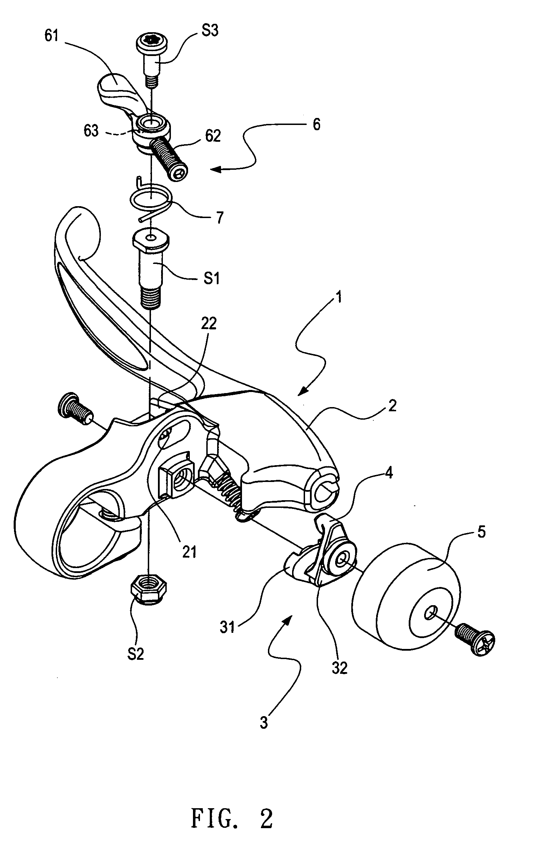

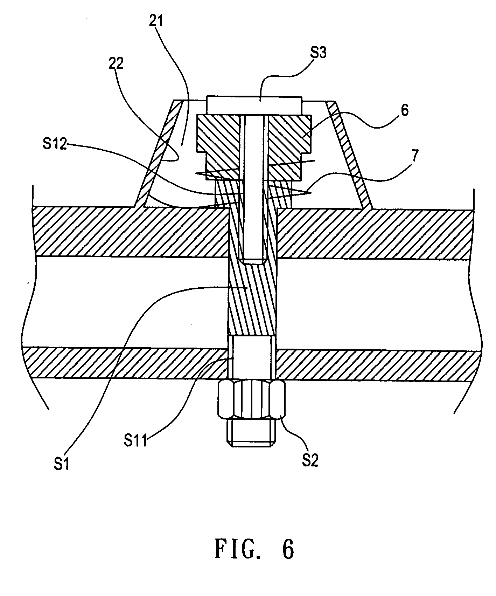

Referring to FIGS. 1 to 6, a bicycle bell 1 in accordance with a preferred embodiment of the invention comprises the following components as discussed in detail below.

A housing 2 is provided with a brake lever (not numbered and shown in phantom in FIG. 1) being pivotably connected thereto. The housing 2 is mounted on a handlebar (not shown) and comprises a vertical channel 21 open to both top and bottom, and an upward extending flange 22 partially surrounding the top of the channel 21.

An abutment member 3 comprises a horizontal base 31 and a vertical triangular section 32 extending upward from one end of the base 31. The abutment member 3 is threadedly secured to the housing 2. A guide member 4 extends from the top corner of the vertical triangular section 32 toward the housing 2 and is parallel to the base 31. Both the abutment member 3 and the guide member 4 are made of plastic and are formed integrally.

A metal drum 5 is threadedly secured to the vertical triangular section 32 with both the abutment member 3 and the guide member 4 being covered therein.

A striking device 6 comprises a bell lever 61, a resilient clapper 62 opposite the bell lever 61 and extending through an elongated transverse opening (not numbered) between both sides of the upward extending flange 22 to contact one side of the guide member 4, a central through hole (not numbered) between the bell lever 61 and the clapper 62, and a cavity 63 adjacent the central through hole.

An expansion spring 7 has one end anchored in the cavity 63 and the other end urged against an inner wall of the upward extending flange 22 to rest upon an internal shoulder of the channel 21. A bolt S1 has an upper internally threaded section S11 and a lower externally threaded section S12. The bolt S1 is inserted through both the expansion spring 7 and the channel 21 to cause its lower externally threaded section S12 to threadedly secure to a nut S2 on the bottom of the housing 2. A threaded fastener S3 is driven through the central through hole of the striking device 6 into the upper internally threaded section S11 to pivotably secure the striking device 6 to the bolt S1. Hence, the expansion spring 7 is biased between the striking device 6 and the internal shoulder of the channel 21. As a result, the striking device 6 is implemented as a spring biased member.

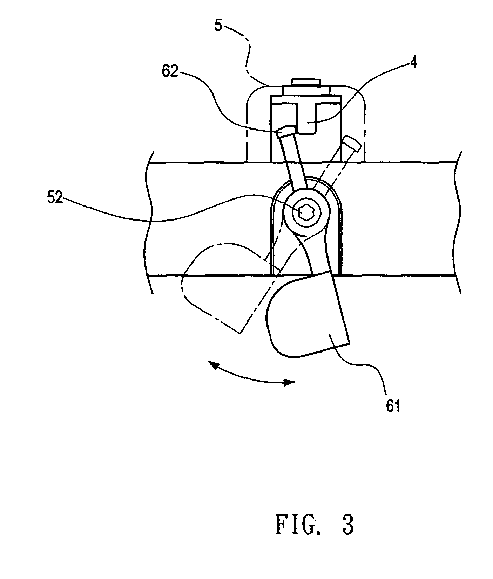

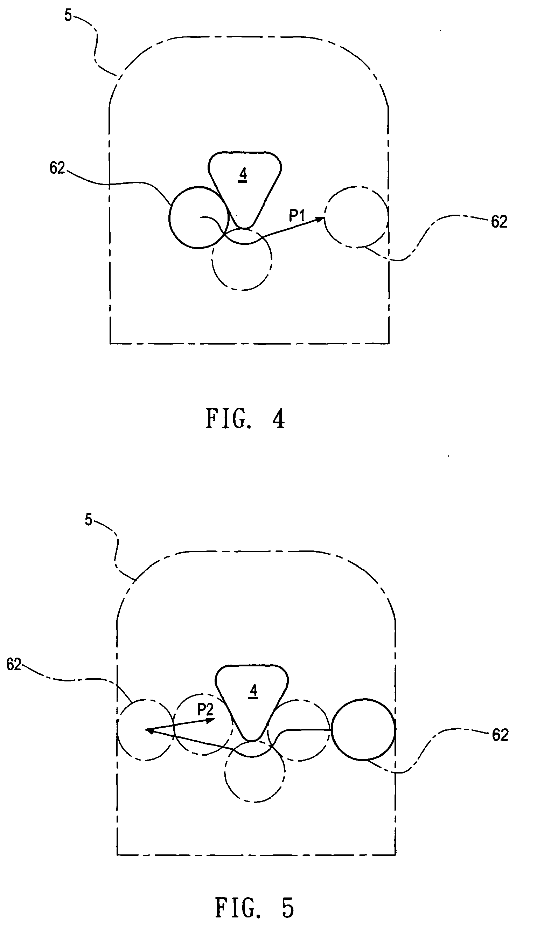

Referring to FIGS. 3 to 6 specifically, a ringing operation of the invention will be described in detail below. A rider may pivot the bell lever 61 to pivotably move the clapper 62 to strike a first position on an inner surface of the drum 5 after passing the guide, member 4 as indicated by path P1 in FIG. 4. Also, the expansion spring 7 is compressed to store elastic energy. As a result, a first particular sequence of tones is played.

The rider may release the bell lever 61 to cause the expansion spring 7 to release it stored energy. As such, the clapper 62 returns to its inoperative position after passing the guide member 4 and striking an opposite second position on the inner surface of the drum 5 as indicated by path P2 in FIG. 5. As a result, a second particular sequence of tones is played.

The invention has the following advantages. The ringing operation of the bell 1 can be done while braking by squeezing the brake lever with the same hand because the bell 1 is mounted in the vicinity of the brake lever. Hence, the ringing operation is easy and the braking operation done at the same time is very safe. Moreover, two different particular sequences of tones are played in one striking operation. Hence, it is more effective as a warning device. Further, the clapper 62 is substantially covered by the drum 5. Hence, the clapper 62 is protected from rain, dust accumulation, and other undesired objects. This can prolong the useful life of the bell 1.

While the invention herein disclosed has been described by means of specific embodiments, numerous modifications and variations could be made thereto by those skilled in the art without departing from the scope of the invention set forth in the claims.

## Claims

1. Combination of a bell and a brake lever for a bicycle, comprising
a housing (2) to be mounted on a handlebar and connected to the brake lever, a channel and an upward extending flange (22) partially surrounding a top of the channel;
a guide member (4) secured to the housing (2);
a drum (5) secured to and covering the guide member (4);
a striking device (6) comprising a bell lever (61) and a resilient clapper (62) opposite the bell lever (61) and extending through the upward extending flange (22) to contact the guide member (4); and
means for resiliently fastening the striking device (6) on the top of the channel,
whereby pivoting the bell lever (61) about the channel will pivotably move the clapper (62) to strike a first position on an inner surface of the drum (5) after passing the guide member (4); and
whereby releasing the bell lever (61) will return the clapper (62) to its inoperative position contacting the guide member (4) after passing the guide member (4) and striking an opposite second position on the inner surface of the drum (5).

2. The combination of claim 1, wherein a first sequence of tones is played when the clapper (62) strikes the first position on the inner surface of the drum (5).

3. The combination of claim 1, wherein a second sequence of tones is played when the clapper (62) strikes the second position on the inner surface of the drum (5).

4. The combination of claim 1, wherein the striking device (61) further comprises a central through hole and a cavity adjacent the central through hole, and the means for resiliently fastening the striking device (61) comprises an expansion spring (7) having one end anchored in the cavity and the other end urged against an inner wall of the upward extending flange (22) to be disposed in the channel, a bolt (S1) having an upper internally threaded section (S11) and a lower externally threaded section (S12), the bolt (S1) being inserted through both the expansion spring (7) and the channel a nut (S2) threadedly secured to the lower externally threaded section (S12) of the bolt (S1) on a bottom of the housing (2), and a threaded fastener driven through the central through hole into the upper internally threaded section (S11) to pivotably secure the striking device (6) to the bolt (S2).

## Patentansprüche

1. Kombination einer Klingel und eines Bremshebels für ein Fahrrad, die umfasst:
ein Gehäuse (2), das auf einer Griffstange montierbar ist und das mit dem Bremshebel, einem Kanal und einem sich nach oben erstreckenden Flansch (22), der teilweise eine Oberseite des Kanals umgibt, verbunden ist,
ein Führungselement (4), das an dem Gehäuse (2) befestigt ist,
eine Glocke (5), die an dem Führungselement (4) befestigt ist und dieses bedeckt,
eine Schlagvorrichtung (6), die einen Klingelhebel (61) und einen elastischen Klöppel (62) gegenüber dem Klingelhebel (61) umfasst und die sich durch den nach oben erstreckenden Flansch (22) erstreckt, um mit dem Führungselement (4) zu kontaktieren, und
Mittel um die Schlagvorrichtung (6) an der Oberseite des Kanals elastisch zu befestigen,
wobei das Drehen des Klingelhebels (61) um den Kanal herum den Klöppel (62) drehbar bewegt, um nach Passieren des Führungselements (4) an eine erste Stelle an der Innenfläche der Glocke (5) zu schlagen, und
wobei das Loslassen des Klingelhebels (61) den Klöppel (62) an seine Ruheposition, in der er das Führungselement (4) berührt, zurückbringt, nachdem er das Führungselement (4) passiert hat und eine gegenüberliegende zweite Stelle an der Innenfläche der Glocke (5) geschlagen hat.

2. Kombination nach Anspruch 1, bei welcher eine erste Folge von Tönen gespielt wird, wenn der Klöppel (62) die erste Stelle an der Innenfläche der Glocke (5) schlägt.

3. Kombination nach Anspruch 1, bei welcher eine zweite Folge von Tönen gespielt wird, wenn der Klöppel (62) die zweite Stelle an der Innenfläche der Glocke (5) schlägt.

4. Kombination nach Anspruch 1, bei welcher die Schlagvorrichtung (61) ferner ein zentrales Durchgangsloch und eine Ausnehmung benachbart zu dem zentralen Durchgangsloch umfasst und bei welcher die Mittel zum elastischen Befestigen der Schlagvorrichtung (61) eine Expansionsfeder (7), die ein Ende in der Ausnehmung verankert hat und die das andere Ende gegen die innere Wand des sich nach oben erstreckenden Flansches (22) gedrückt hat, um in dem Kanal angeordnet zu sein, einen Bolzen (S1), der einen oberen internen Gewindebereich (S11) und einen unteren externen Gewindebereich (S12) umfasst, wobei der Bolzen (S1) durch sowohl die Expansionsfeder (7) als auch den Kanal hindurch geführt ist, eine Mutter (S2), die durch Verschraubung an einer Unterseite des Gehäuses (2) an dem unteren externen Gewindebereich (S12) des Bolzens (S1) befestigt ist, und ein Gewindebefestigungselement umfasst, das durch das zentrale Durchgangsloch in dem oberen internen Gewindebereich (S11) geführt ist, um drehbar die Schlagvorrichtung (6) auf dem Bolzen (S1) zu befestigen.

## Revendications

1. Combinaison de sonnette et de levier de frein pour bicyclette comprenant
un bâti (2) à monter sur un guidon et relié au levier de frein, un canal et une bride qui s'étend vers le haut (22) entourant partiellement une partie supérieure du canal,
un élément guide (4) fixé au bâti (2),
un tambour (5) fixé à et couvrant l'élément guide (4),
un dispositif percutant (6) comprenant un levier de sonnette (61) et un battant élastique en face du levier de sonnette (61) et qui s'étend à travers la bride qui s'étend vers le haut (22) pour avoir contact avec l'élément guide (4) et
des moyens pour fixer de manière élastique le dispositif percutant (6) sur le dessus du canal,
cependant que le pivotement du levier de sonnette (61) autour du canal déplacera par pivotement le battant (62) pour frapper une première position sur une surface intérieure du tambour (5) après avoir passé l'élément guide (4) et
le relâchement du levier de sonnette (61) fera retourner le battant (62) à sa position non opérationnelle en contact avec l'élément guide (4) après avoir passé l'élément guide (4) et frappé une seconde position opposée sur la surface intérieure du tambour (5).

2. Combinaison selon la revendication 1, une première séquence de sons étant jouée lorsque le battant (62) frappe la première position sur la surface intérieure du tambour (5).

3. Combinaison selon la revendication 1, une seconde séquence de sons étant jouée lorsque le battant (62) frappe la seconde position sur la surface intérieure du tambour (5).

4. Combinaison selon la revendication 1, le dispositif percutant (61) comprenant de plus un trou traversant central et une cavité adjacente au trou traversant central et les moyens pour fixer de manière élastique le dispositif percutant (61) comprenant un ressort d'expansion (7) qui a une extrémité ancrée dans la cavité et l'autre extrémité poussée contre une paroi intérieure de la bride qui s'étend vers le haut (22) qui doit être disposée dans le canal, un boulon (S1) ayant une section supérieure filetée à l'intérieur (S11) et une section inférieure filetée à l'extérieur (S12), le boulon (S1) étant inséré à la fois à travers le ressort d'expansion (7) et le canal, un boulon (S2) étant fixé par le filetage à la section inférieure filetée à l'extérieur (S12) du boulon (S1) sur un fond du bâti (2) et une attache filetée traversant le trou traversant central jusque dans la section supérieure filetée à l'intérieur (S11) pour fixer en pivotement le dispositif percutant (6) au boulon (S2).
